# EUROPEAN PATENT APPLICATION

(11) **EP 1 371 968 A1**
(43) Date of publication of application: **17.12.2003**
(21) Application number: 03253712.8
(22) Date of filing: 12.06.2003
(51) Int. Cl.: G01N 21/90, B65B 57/10, B65B 1/30, B67C 3/26

(54) **Container contents monitoring assembly**

(30) Priority: 14.06.2002 GB 0213704
(71) Applicant: Gei Processing and Packaging Machinery Limited, Bedfordshire MK17 8NW (GB)
(72) Inventor: Sheppard, Paul Frederick, Leighton Buzzard, Bedfordshire LU7 2SP (GB)
(74) Representative: Crouch, David John

(57) **Abstract**

A container contents monitoring assembly (5) which comprises a rotary support means (10) which serves to support and rotate a container (46), the contents of which are to be monitored. The container contents monitoring assembly (5) also comprises a radiation source (44) which serves to direct radiation towards the contents of such a container (46). The container contents monitoring assembly (5) further comprises a radiation monitor (54) positioned to monitor radiation from the radiation source (44) which has passed through the contents of such a container (46). The radiation source (44) is positioned on or in the rotary support means (10).

## Description

The present invention relates to a container contents monitoring assembly comprising a rotary support means which serves to support and rotate a container, the contents of which are to be monitored, a radiation source which serves to direct radiation towards the contents of such a container, and a radiation monitor positioned to monitor radiation from the radiation source which has passed through the contents of such a container.

Previously proposed container contents monitoring assemblies comprise such an arrangement as described above, in which the rotary support means is positioned below such a container, the contents of which are to be monitored, when the assembly is in use, and the radiation source is positioned below the support means. To enable the radiation to pass through the rotary support means, the latter has a downwardly extending through-hole. As a result, fragments of broken glass from such a container which may have been damaged may fall into this through-hole. The radiation source is therefore positioned some distance below the rotary support means in order that such broken glass may have a passage through which to fall away, so that it will not interfere with the monitoring process.

A problem encountered with such an arrangement as this, with the radiation source positioned some distance from such a container is the loss of effective radiation from the source because of its distance from the container.

The present invention seeks to provide a remedy.

Accordingly, the present invention is directed to a container contents monitoring assembly having the features set out in the opening paragraph of the present specification, in whichthe radiation source is positioned on or in the rotary support means. In such a construction, the distance between the radiation source and such a container, the contents of which are to be monitored, can be reduced, and as a result, exposure of the radiation source to the contents of such a container is increased.

Preferably, the radiation source is secured to the rotary support means.

Preferably, the rotary support means is located underneath such a container, the contents of which are to be monitored, when such a container contents monitoring assembly is in use.

However, it is possible for the radiation source to be supported independently of the rotary support means. For example it may be held within an annular part of the rotary support means. In such a construction the radiation source may remain stationary when the rotary support means rotates.

Advantageously, the rotary support means comprises a spin table upon which such a container rests.

Preferably, the radiation source is located in an upper surface of the spin table.

In a preferred construction, the radiation source is recessed from the upper surface of the spin table.

Advantageously, the spin table has a downwardly extending through-hole through which fragments of broken glass from such a container which may have been damaged may fall.

In that case, an advantageous location for the radiation source is on the internal wall of the spin table which defines the through-hole.

Advantageously, the radiation source is arranged in the form of a disc or plug.

In a preferred construction, the radiation source comprises a plurality of light emitting diodes.

Advantageously, the plurality of light emitting diodes are embedded in the said internal wall of the spin table.

Preferably, a multiplicity of container contents monitoring assemblies are arranged in a conveyor system. This allows more than one such container may be monitored simultaneously.

In a preferred construction, such a conveyor system comprises an input starwheel, which positions a container thus entering such a conveyor system onto one of a multiplicity of spin tables arranged around the outer circumference of a rotary carousel, each spin table being spun by means of contact with a spin belt which operates along a length of the outer circumference of the rotary carousel, and then braked by means of a contact with a orake belt which operates along a further length of the outer circumference of the rotary carousel, the data from its radiation monitor then being captured and processed by a data processor, whereupon the container is removed from the rotary carousel by means of an output starwheel.

An example of a container contents monitoring assembly made in accordance with the present invention will now be described with reference to the accompanying drawings, in which:
- Figure 1: shows an axial view of a container contents monitoring assembly embodying the present invention;
- Figure 2: shows a plan view of a conveyor system incorporating a multiplicity of assemblies each as shown in Figure 1.

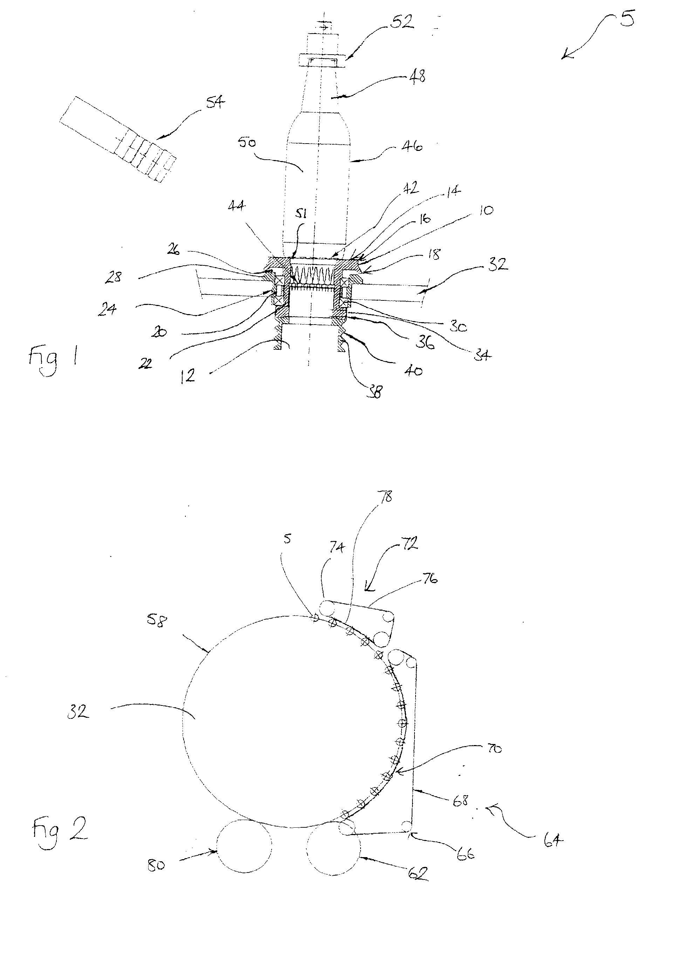

The container contents monitoring assembly 5 as shown in Figure 1 comprises a circular spin table 10 having a downwardly extending through-hole 12. The spin table 10 has an uppermost portion 14 in the form of a ring which defines an upper region of the downwardly extending through-hole 12.

The uppermost portion 14 has around its outer edge 16 a downwardly extending lip 18. Below the uppermost portion 14 there is a middle portion 20 of the spin table 10 which comprises an inner ring 22 and an outer ring 24, the outer ring 24 having at its upper end 26, a flange 28. Between the inner ring 22 and the outer ring 24, is positioned a bearing housing 30. The downwardly extending lip 28 of the outer ring 24 of the middle portion 20 of the spin table 10 clamps onto a portion of a carousel 32 positioning the spin table 10 onto the carousel 32.

A lower part 34 of the middle portion 20 of the spin table 10 is provided with rings 36 which act as slip rings to the bearing housing 30. The spin table 10 also has a bottom portion 38 below the middle portion 20. This bottom portion 38 has an outer cylindrical surface 40 formed with annular grooves.

In the uppermost portion 14 of the spin table 10 there sits a plug or hardened shield 42 which covers the opening of the downwardly extending through-hole 12. Recessed downwardly from the hardened shield 42 is a light emitting diode plate 44 which forms a disc or plug in the downwardly extending through-hole 12.

A container 46 is placed on the hardened shield 42. The container 46 has a neck 48 extending upwardly from its main body 50, having a base 51. The container 46 is located in its position on the spin table 10 by means of a sheath 52 which extends downwardly over an upper end of the neck 48 of the container 46.

Positioned at an inclination designed to focus on the lower portion of the contents of the container 46 is a radiation sensor in the form of a camera 54.

The conveyor system as shown in Figure 2 comprises a rotary carousel 32 whose outer periphery 58 has positioned at equal distances around it container contents monitoring assemblies 5 each as shown in Figure 1 above.

An input starwheel 62 is arranged to feed containers to the rotary carousel 32. A spin belt system 64 comprising wheels 66 and a belt 68 drivingly engages each of the container contents monitoring assemblies 5 once it passes the input starwheel 62. This is effected by engagement of the belt 68 on the cylindrical surface 40. The spin belt system 64 operates around an arcuate path 70 around part of the periphery of the rotary carousel 32.

Positioned beyond the spin belt system 64 around the rotary carousel 32 is a brake belt system 72 which comprises further wheels 74 and a further belt 76 extending around a smaller arcuate path 78 of the rotary carousel 32. An output starwheel 80 which engages with the rotary carousel 32 is positioned adjacent to the input starwheel 62.

A container 46 thus enters the conveyor system as illustrated in Figure 2 by means of the input starwheel 62 and is positioned onto the hardened shield 42 of the uppermost portion 14 of the spin table 10. The spin table 10 is held in position on the rotary carousel 32 by means of the downwardly extending lip 28 of the outer ring 24 of its middle portion 20.

As the container contents monitoring assembly 5 is moved in an anti-clockwise direction by slow rotation of the carousel 32, the grooved surface 40 of the bottom portion 38 of the spin table 10 engages with the belt system 64 and is spun whilst it passes along the path 70 of the rotary carousel 32. During this time the spin speed of the container 46 is increased. On passing beyond this path 70 of the rotary carousel 32, the cylindrical surface 40 of the bottom portion 38 of the spin table 10 engages with the belt 76 along the further path 78 of the rotary carousel 32 by means of wheels 74. In this way rotation of the container 46 is braked until it comes to rest, whereupon the sheath 52 is brought down onto the upper end of the neck 48 of the container 46 holding the container 46 securely in place on the hardened shield 42 of the uppermost portion 14 of the spin table 10.

The light emitting diode plate 44 emits radiation in the form of visible light towards the base 51 of the container 46 and its contents which have been spun, and the sensor 54 monitors the radiation thus transmitted from the plate 44 and scattered from the contents at the bottom of the container 46. Having been monitored, the container 46 is removed from the rotary carousel 32 by means of the output starwheel 80.

During this monitoring procedure, should any such container be shattered, fragments of such a container will be thrown off the spin table 10 by centrifugal force and, any remaining fragments may be swept away by a sweeper (not shown).

Numerous variations and modifications may occur to the reader without taking the resulting construction outside the scope of the present invention. For example, this conveyor system could be used in order to monitor container contents for contaminants such as broken glass, the radiation thus monitored may be analysed by a data processor and containers with contaminated contents may be rejected from the carousel at a rejection station adjacent to the carousel or upon exiting such a system.

Analysis of data from such a data processor may be used to identify the dynamic movement of foreign particles/bodies with the contents of such container, for example to distinguish foreign particles from small bubbles of air.

Alternatively, this assembly may be used for monitoring the correct constituent composition of the contents of containers.

Instead of using a spin table on which to position such a container, the contents of which are to be monitored, each container could instead be retained and rotated by means of a clamp which holds the upper part of such a container.

Instead of positioning the light emitting diodes in the form of a plate, they could be arranged around the internal wall of the downwardly extending through-hole 12. With this configuration, any broken fragments of such containers, the contents of which are to be monitored, can fall away through this through-hole, dropping down through relief holes (not shown) or onto the side of the carousel onto a base plate (not shown).

With the light emitting diodes in this configuration, they could be protected by some hardened glass or other protective material from any broken fragments which may fall away through the through-hole 12.

If, for example, the radiation source used is light, the hardened shield 42 may be made of sintered glass, which may help to diffuse the light in all directions at the base 51 of such a container 46, thus improving exposure of the contents of such a container 46 to this radiation.

Instead of light radiation, the radiation source may emit X-rays, microwaves, ultra-sonics, or low source radio-activity, for example, with a correspondingly adapted sensor.

If other radiation sources than light are used, the hardened shield 42 may be made so as to collimate the radiation source, in order to concentrate the radiation source on the base 51 of such a container 46.

The spin speed and time of spin of the container 46 may be varied according to the size and contents of the container 46 which are to be monitored.

## Claims

1. A container contents monitoring assembly (5) comprising a rotary support means (10) which serves to support and rotate a container (46), the contents of which are to be monitored, a radiation source (44) which serves to direct radiation towards the contents of such a container (46), and a radiation monitor (54) positioned to monitor radiation from the radiation source (44) which has passed through the contents of such a container (46), **characterised in that** the radiation source (44) is positioned on or in the rotary support means (10) .

2. A container contents monitoring assembly (5) according to claim 1, **characterised in that** the radiation source (44) is secured to the rotary support means (10).

3. A container contents monitoring assembly (5) according to claim 1 or claim 2, **characterised in that** the rotary support means (10) is located underneath the container (46) when such a container contents monitoring assembly (5) is in use.

4. A container contents monitoring assembly (5) according to claim 1, **characterised in that** the radiation source (44) is supported independently of the rotary support means (10).

5. A container contents monitoring assembly (5) according to claim 4, **characterised in that** the radiation source (44) is held within an annular part of the rotary support means (10).

6. A container contents monitoring assembly (5) according to claim 5, **characterised in that** the radiation source (44) remains stationary when the rotary support means (10) rotates.

7. A container contents monitoring assembly (5) according to any preceding claim, **characterised in that** the rotary support means (10) comprises a spin table (10) upon which such a container (46) rests.

8. A container contents monitoring assembly (5) according to claim 7, **characterised in that** the radiation source (44) is located in an upper surface (14) of the spin table (10).

9. A container contents monitoring assembly (5) according to claim 8, **characterised in that** the radiation source (44) is recessed from the upper surface (14) of the spin table (10).

10. A container contents monitoring assembly (5) according to claim 7, 8 or 9, **characterised in that** the spin table (10) has a downwardly extending through-hole (12) through which fragments of broken glass from such a container (46) which may have been damaged may fall.

11. A container contents monitoring assembly (5) according to claim 10, **characterised in that** the radiation source (44) is located on an internal wall of the spin table (10) which defines the through-hole (12).

12. A container contents monitoring assembly (5) according to claim 11, **characterised in that** the radiation source (44) is arranged in the form of a disc or plug.

13. A container contents monitoring assembly (5) according to any preceding claim, **characterised in that** the radiation source (44) comprises a plurality of light emitting diodes.

14. A container contents monitoring assembly (5) according to claim 13, **characterised in that** the plurality of light emitting diodes (44) are embedded in an internal wall of the spin table (10) .

15. A container contents monitoring assembly (5) according to any preceding claim, **characterised in that** a multiplicity of container contents monitoring assemblies (5) are arranged in a conveyor system.

16. A container contents monitoring assembly (5) according to claim 15, **characterised in that** the conveyor system comprises an input starwheel (62), which positions a container (46) thus entering such a conveyor system onto one of a multiplicity of spin tables (10) arranged around the outer circumference of a rotary carousel (32), each spin table (10) being spun by means of contact with a spin belt (68) which operates along a length (70) of the outer circumference of the rotary carousel (32), and then braked by means of a contact with a brake belt (76) which operates along a further length (78) of the outer circumference of the rotary carousel (32), the data from its radiation monitor (54) then being captured and processed by a data processor, whereupon the container (46) is removed from the rotary carousel by means of an output starwheel (80).
